# EUROPEAN PATENT APPLICATION

(11) **EP 1 034 728 A2**
(43) Date of publication of application: **13.09.2000**
(21) Application number: 00200720.1
(22) Date of filing: 29.02.2000
(51) Int. Cl.: A47G 19/34

(54) **Improved distributor-dispenser for substances having a fluid-like behaviour**

(30) Priority: 10.03.1999 IT MI990485
(71) Applicant: Snips S.r.l., 20121 Milano (IT)
(72) Inventor: Piacenza, Giuseppe, 20070 Muzza di Cornegliano Laudense (IT)
(74) Representative: Martegani, Franco

(57) **Abstract**

A distributor-dispenser of substances having a fluid-like behaviour (for example, coffee) comprises in combination: a container (11) for storing the substance (C) which is to be dispensed in the desired dose, and a dispensing device (13) for dispensing the said substance (C), associated to the said storage container (11). The said container (11) has a generally tubular configuration and is divided into two chambers (15, 16) by a transverse diaphragm or partition (14) which extends longitudinally throughout the length of the container (11). In addition, the said container (11) is provided at one end with a closing lid (12), whilst its opposite end is in direct communication with the said dispensing device (13), which is made up of a multi-chamber distribution drawer (28) mounted so that it can turn on the said end of the container (11) opposite to the said closing lid (12), the said lid (12) being made up of two parts (20, 21) which may be opened and closed selectively, independently of one another.

## Description

The present invention refers to a distributor-dispenser for substances having a fluid-like behaviour, particularly, but not exclusively, substances made up of small particles and/or grains, such as ground coffee.

Although many types of distributors-dispensers of substances having a fluid-like behaviour, such as ground coffee, are so far known, none of them is able to meet all the needs of ease of use, simplicity, and hence contained manufacturing costs, as well as capability of dispensing, as desired, either a single dose or a plurality of doses at the same time precisely and in such a way that the user may be certain of the presence of one or more doses ready for being dispensed or may realize the immediate need of supplying the doses to the distributing device.

Consequently, the general purpose of the present invention is to overcome the drawbacks of the known art.

More precisely, the main purpose of the present invention is to make a distributor-dispenser whereby it is possible, as desired, to dispense either a single dose or a number of doses at the same time, according to the requirements.

Another purpose of the invention is to make a distributor-dispenser that is easy to use.

Another purpose of the invention is to make a distributor-dispenser that is easy and economic to manufacture.

Yet a further purpose of the invention is to make a distributor-dispenser whereby each single dose, or a multiple of the said single dose, may be dispensed precisely.

Not the least important purpose of the invention is to make a distributor-dispenser having a configuration that is aesthetically pleasing.

The purposes referred to above are achieved by a distributor-dispenser of substances having a fluid-like behaviour, for example ground coffee, which presents the characteristics described in the main claim attached hereto and in the subordinate claims.

The structural and functional characteristics of the device of the invention and its advantages with respect to the known art will be clearly understandable from an examination of the following description, which refers to the attached drawings, wherein an example of practical embodiment of the invention is illustrated.

In the drawings:
- Figure 1 is a perspective view illustrating a distributor-dispenser made according to the principles of the invention;
- Figure 2 is a front elevation view of the distributor-dispenser of Figure 1;
- Figure 3 is a plan view of the distributor-dispenser of Figure 2;
- Figure 4 is a side elevation view according to the arrow F of Figure 2;
- Figure 5 is a plan view illustrating just the lid of the distributor-dispenser;
- Figure 6 is an exploded perspective view partially cutaway illustrating the distributor-dispenser according to the invention;
- Figure 7 is a view of the distributor-dispenser of Figure 6, shown assembled;
- Figure 8 is an exploded vertical cross-sectional view of the distributor-dispenser according to the invention;
- Figure 9 is a plan view taken according to the plane of trace IX-IX of Figure 8;
- Figure 10 is a vertical cross section illustrating the distributor-dispenser according to the invention with the lid partially open in the position of being filled with the substance in the storage chamber;
- Figure 11 is a view like that of Figure 10 but illustrating the lid partially open in the position of dispensing one or more doses; and
- Figure 12 is a plan view of the distributor-dispenser without a lid.

With reference to the drawings, the distributor-dispenser according to the invention is indicated as a whole by the reference number 10 and is structurally made up of the combination of three pieces; namely, a central container 11, a top closing lid 12, and an underlying dispensing device 13.

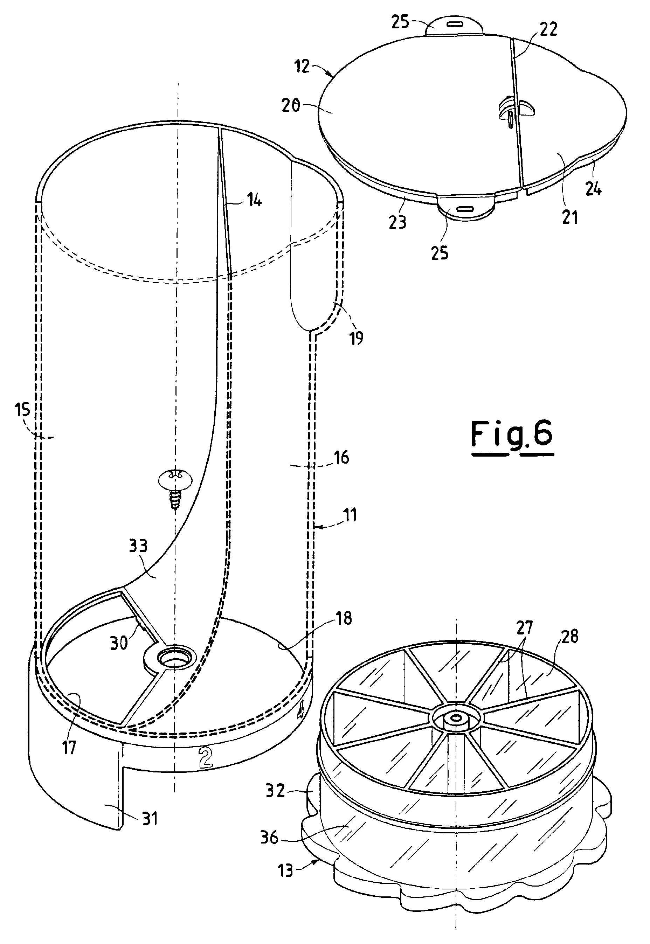

As is clearly illustrated, in particular in Figures 6 to 9 of the drawings, the said container 11 has a generally tubular configuration and is divided into two parts by a shaped transverse diaphragm or partition 14 which extends longitudinally throughout the length of the container 11 itself.

The diaphragm 14 is not set diametrically, but is eccentric so as to identify one first and wider chamber 15 for introduction, storage and delivery of the coffee to the dispensing device 13, and one second chamber 16, which is less wide and has a substantially flattened tubular configuration, for dispensing of the dose or doses contained in the dispensing device 13.

For this purpose, the chambers 15 and 16 are in direct communication, through respective openings 17 and 18, with the underlying dispensing device 13.

As emerges clearly from the drawings, the said openings 17 and 18 are delimited by the shaped diaphragm 14 and by the circumference of the tubular body 11.

The chamber 16, at its free end, is moreover shaped in the form of a spout for pouring 19.

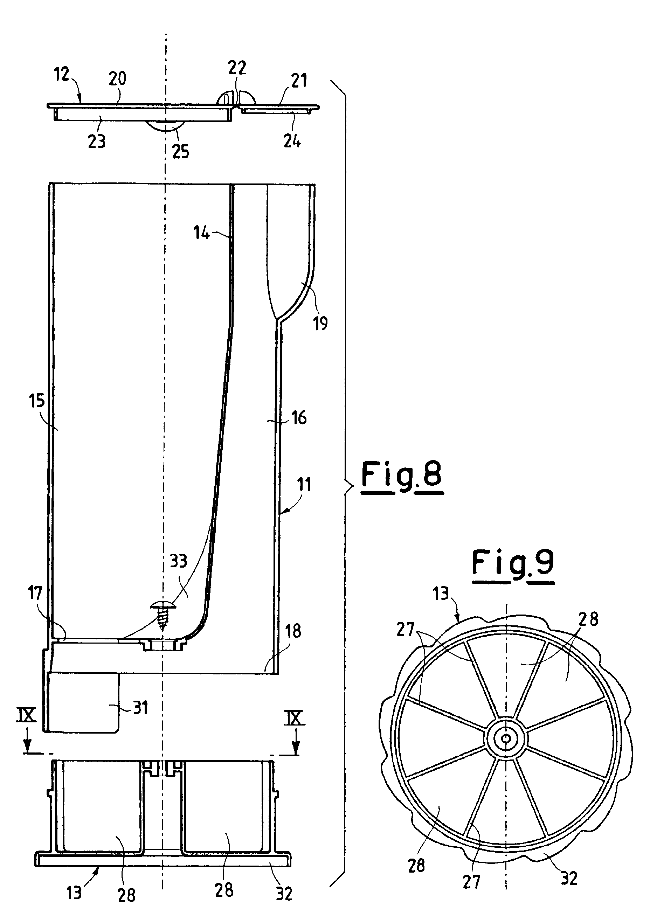

The lid 12 is divided into two parts 20, 21, hinged together along a line of less resistance 22, where the part 20 is designed to cover the chamber 15, whilst the part 21 is designed to cover the chamber 16 (Figures 8, 10 and 11) . For this purpose, the said parts 20, 21 are provided with respective collars 23, 24, which insert, with slight interference, into the free tops of the chambers 15, 16, the said collars 23, 24 having a configuration in plan view complementary to the said chambers.

In addition, the part 20 of the lid 12 is moreover provided with a pair of flexible lugs 25 with holes, which are set diametrically opposite to one another and are designed to clip onto teeth 26 that project from the shell of the tubular container 11. In this way, any accidental detachment of the lid 12 is prevented when the distributor-dispenser is turned upside down (in the direction indicated by the arrow 38 in Figure 11) in the course of the operation of dispensing one or more doses, and the lid 12 is subjected to the weight of the coffee contained in the chamber 15, whilst the part 21 is open for delivery of the dose. Furthermore, the lugs 25 prevent detachment of the lid 12 not only during use but also in the case of the distributor-dispenser getting accidentally knocked over.

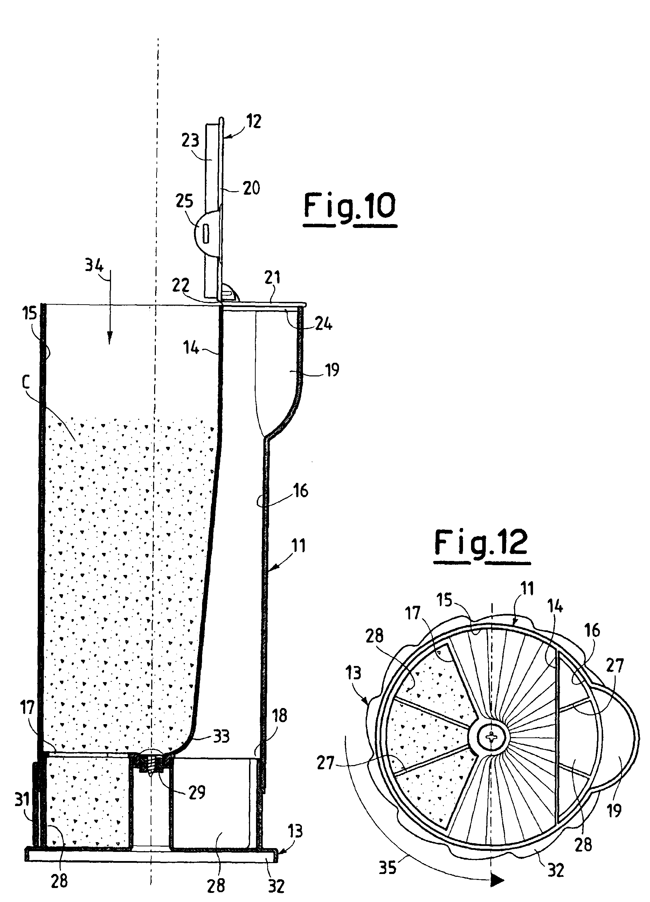

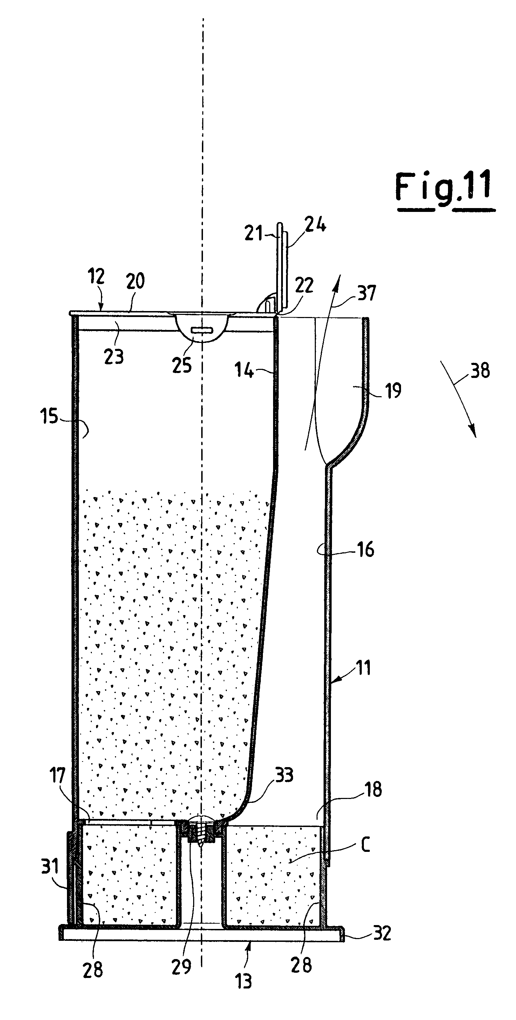

The dispensing device 13 is in the form of a cylindrical distribution drawer divided internally, by means of radial walls 27, into a plurality of chambers 28, the volume of each of which corresponds to one dose of substance, and where a plurality of said chambers 28 (three in the example illustrated in Figure 12) are simultaneously in direct communication with the overlying chamber 15, from which they receive directly, by free fall, the substance to be dispensed. For this purpose, the diaphragm 14 has a portion 33 shaped like a chute.

Of course, as is clearly illustrated in the drawings, the width and configuration of the opening 17 are altogether identical, in plan view, to those of three adjacent chambers 28 of the dispensing device 13.

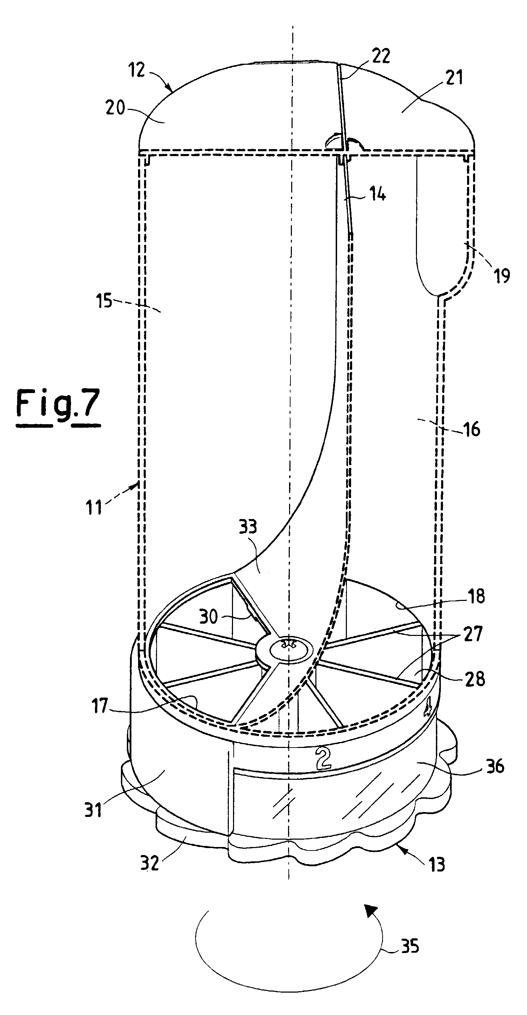

The said dispensing device is mounted so that it can turn in 29 at the end of the chute 33 of the diaphragm 14 and can be turned in stepwise fashion, the steps being determined by a small detent 30 (Figure 6 and 7), which is elastically yielding, acts on the top edge of the walls 27, and is made out of the free edge of the chute 33.

Each step corresponds to the feeding of one chamber 28 of the dispensing device 13.

Also co-operating with the dispensing device 13 is a circumferential shell 31 which extends from the container 11 and has the purpose of covering only the chambers 28 of the device 13 that are in a position corresponding to the overlying loading chanter 15 (Figure 7) .

The device 13 is in fact made of transparent or translucid material so that it is possible to see how much each chamber 28 contains.

The step-wise rotation of the dispensing device 13 with rotating drawer is controlled manually with the aid of a shaped ring 32.

Operation of the distributor-dispenser is clear from the above description with reference to the figures and is briefly as follows:

The chanter 15 of the container 11 is filled with the substance having a fluid-like behaviour, for example coffee C, which is introduced in the direction indicated by the arrow 34 (Figure 10), with the part 20 of the lid 12 open and with the part 21 closed.

Falling by gravity, the coffee passes through the opening 17 and fills the chambers 28 of the dispensing device 13, for example the three chambers 28 that are in direct communication with the overlying chanter 15, as illustrated in Figure 12.

In this condition, the distributor-dispenser is ready for use, of course after the part 20 of the lid 12 has been re-closed.

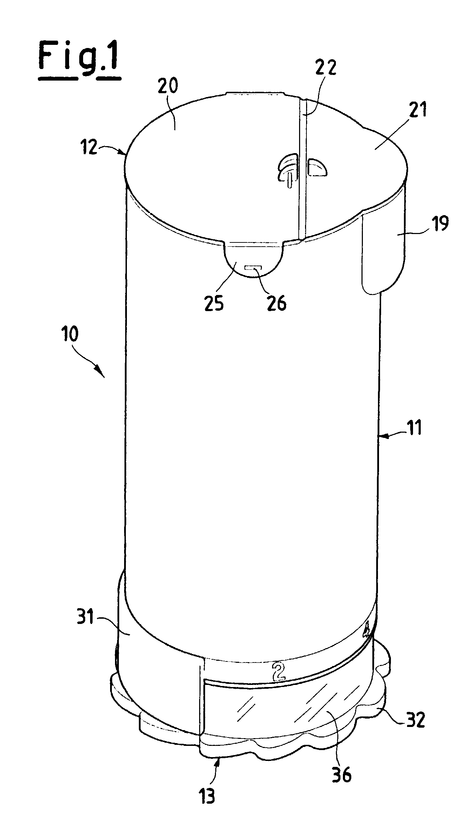

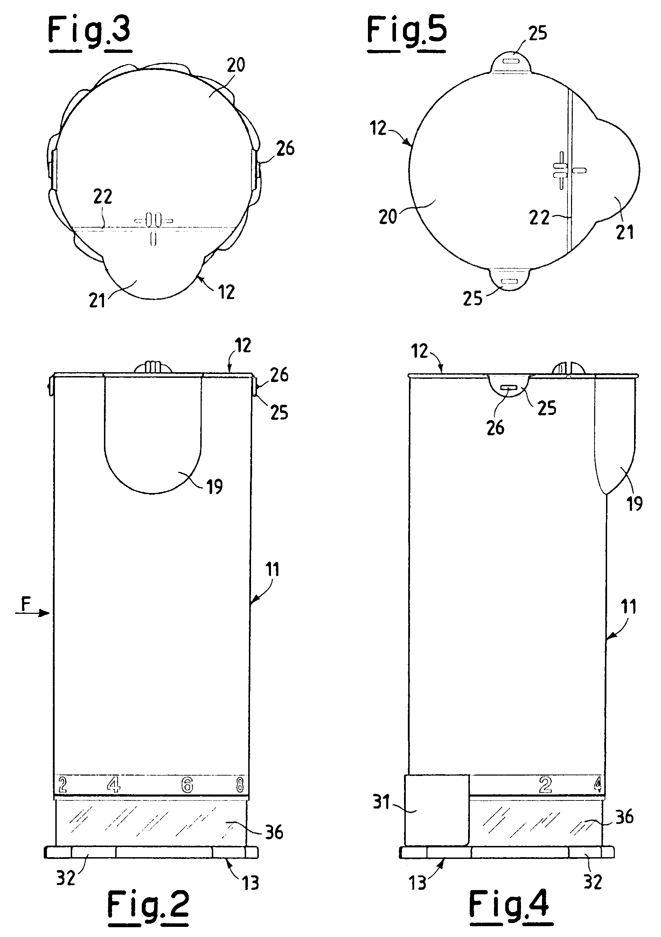

As the user can see, through the transparent area 36 (Figures 1, 2, 4 and 7), which is not covered by the shell 31, when the dispensing chambers 28 are empty, he turns the device 13 in the direction indicated by the arrow 35 one or more steps according to the number of doses that he wishes to dispense, so as to bring the chamber or chambers 28, each of which contains one dose of the product, into line with the distribution chamber 16.

In the course of this rotation, the dose of coffee contained in each chamber 28 is perfectly smoothed off by the free edge of the chute 33.

Now, as illustrated in Figure 11, when the part 21 of the lid 12 is opened, the dose or doses can be poured in the direction indicated by the arrow 37 by means of an adequate inclination of the distributor-dispenser 10, or by almost totally turning it upside down in the direction indicated by the arrow 38.

The extreme simplicity of the distributor-dispenser according to the present invention emerges clearly both in terms of construction and in terms of use, and thus the distributor-dispenser may be manufactured at a low cost. Likewise evident is that, when the said distributor-dispenser is used, it is possible to deliver a single dose or a number of doses indifferently, according to the particular need.

In addition, the structure of the distributor-dispenser is such as to enable a configuration that is also aesthetically pleasant.

In this way, the purposes referred to in the introductory part of the description are achieved.

The sphere of protection of the present invention is defined in the ensuing claims.

## Claims

1. Distributor-dispenser of substances with fluid-like behaviour (for example, coffee) of the type comprising in combination: a container (11) for storing the substance (C) which is to be dispensed in the desired dose, and a dispensing device (13) for dispensing the said substance (C), associated to the said storage container (11) , characterized in that the said container (11) has a generally tubular configuration and is divided into two chambers (15, 16) by a transverse diaphragm or partition (14) which extends longitudinally throughout the length of the container (11), the said container (11) being provided at one end with a closing lid (12), whilst its opposite end is in direct communication with the said dispensing device (13), which is made up of a multi-chamber distribution drawer (28) mounted so that it can turn on the said end of the container (11) opposite to the said closing lid (12), the said closing lid (12) being made up of two parts (20, 21) which may be opened and closed selectively, independently of one another.

2. Distributor-dispenser according to Claim 1, characterized in that the said transverse diaphragm or partition (14) has at the bottom a chute-shaped portion (33) which discharges the substance, through an opening (17), into the chambers (28) of the dispensing device (13).

3. Distributor-dispenser according to Claim 1, characterized in that the chambers (28) of the device (13) are in direct communication, through an opening (18), with the said chamber (16).

4. Distributor-dispenser according to Claim 1, characterized in that the said diaphragm (14) is eccentric, so as to identify one first and wider chamber (15) for introduction, storage and delivery of the substance to the dispensing device (13), and one second chamber (16), which is less wide and has a substantially flattened tubular configuration, for dispensing of the dose or doses contained in the dispensing device (13).

5. Distributor-dispenser according to Claim 1, characterized in that the said closing lid (12) is fixed, in such a way that it can be removed, to the tubular container (11).

6. Distributor-dispenser according to Claim 5, characterized in that the said closing lid (12) is fixed, in such a way that it can be removed, to the tubular container (11) by means of a pair of flexible lugs (25) with holes, which are set diametrically opposite to one another and clip onto teeth (26) that project from the shell of the tubular container (11).

7. Distributor-dispenser according to Claim 1, characterized in that the said two parts (20, 21) are applied to the top of the tubular container (11), with slight interference, by means of respective collars (23, 24) , and are hinged together along a line of less resistance (22).

8. Distributor-dispenser according to Claim 1, characterized in that the said dispensing device (13) can turn in a stepwise fashion, the steps being determined by a detent (30) made on the free edge of the chute (33), the said detent (30) co-operating with the top edge of radial walls (27) which identify the said chambers (28).

9. Distributor-dispenser according to Claim 1, characterized in that the said dispensing device (13) is in the form of a cylindrical distribution drawer divided internally, by means of radial walls (27), into a plurality of chambers (28), the volume of each of which corresponds to one dose of substance, and in that a plurality of said chambers (28) are simultaneously in direct communication with the overlying chamber (15), from which they receive directly, by free fall, the substance to be dispensed.

10. Distributor-dispenser according to Claim 9, characterized in that the said dispensing device is basically transparent and is partially covered by a circumferential shell (31) extending from the container (11).

11. Distributor-dispenser according to Claim 9, characterized in that the said device (13) is provided, at its base, with a ring for turning (32).
